# EUROPEAN PATENT SPECIFICATION

(11) **EP 3 333 113 B1**
(45) Date of publication and mention of the grant of the patent: **02.03.2022**
(21) Application number: 16202747.8
(22) Date of filing: 07.12.2016
(51) Int. Cl.: B66C 13/46, B60P 1/54

(54) **A VEHICLE, AND A METHOD FOR A VEHICLE, INCLUDING TARGET MARKER ON AN OVERVIEW IMAGE**
FAHRZEUG UND VERFAHREN FÜR EIN FAHRZEUG MIT ZIELMARKIERUNG AUF EINEM ÜBERSICHTSBILD
VÉHICULE ET PROCÉDÉ POUR UN VÉHICULE COMPRENANT UN MARQUEUR DE CIBLE SUR UNE IMAGE D'ENSEMBLE

(43) Date of publication of application: 13.06.2018
(73) Proprietor: Hiab AB, 164 22 Kista (SE)
(72) Inventor: RÖSTH, Marcus, 824 43 Hudiksvall (SE)
(74) Representative: Bjerkéns Patentbyrå KB (Stockholm)

(56) References cited:
- EP-A1- 3 100 899
- WO-A1-2015/114775
- GB-A- 2 425 520
- US-A1- 2005 192 702

## Description

### Technical field

The present disclosure relates to a vehicle, and a method for a vehicle, providing a display unit presenting an overview image, e.g. a bird-view image, of the area surrounding the vehicle and including a superimposed target marker.

### Background

For utility vehicles of various kinds, e.g. heavy vehicles, fire fighting vehicles, transport vehicles, but also for cars, visual assistance systems are known that comprise cameras for monitoring the ground area around the vehicle. For example, such camera systems are known for trucks to facilitate the manoeuvring of the vehicles, in particular in a backward driving situation. The driver may then watch the vehicle position on a display during driving operation.

In the following some prior art will be discussed illustrating various aspects of assistance systems.

In JP-2008074594 is disclosed a monitoring system for a vehicle provided with a crane and support legs. The crane comprises a rotatable base and a telescopic crane boom mounted to the base. Cameras are mounted to the crane and configured to monitor the area surrounding the vehicle. Images taken by the cameras are transformed into a bird view image by means of an image transformation unit and this bird view image is shown on a display in the driver's cabin of the vehicle. Markings lines illustrating the position of the support legs when extended by 50% and 100% are superposed on the bird view. Furthermore, a marking illustrating the area of rotation covered by the rotatable base is also superposed on the bird view. Hereby, it will be possible for the driver, when parking the vehicle, to check that there are no obstacles in the surroundings which will interfere with the support legs and the rotational base.

US-20150330146 discloses a monitoring system for a utility vehicle provided with an aerial apparatus, for instance in the form of a turnable ladder or a crane, and support legs. Cameras are mounted to the vehicle and configured to monitor the ground areas on which the support legs rest in the operating position. The ground areas monitored by the cameras are shown on a display in the driver's cabin of the vehicle. Markings illustrating the position of the support legs in the operating position are superposed on the image shown on the display. Furthermore, a marking illustrating the vertical turning axis of the aerial apparatus is also superposed on the image shown on the display. Hereby, it will be possible for the driver, when parking the vehicle, to check that there are no obstacles in the surroundings which will interfere with the support legs. EP-2952467 discloses a monitoring system for a vehicle provided with a lifting device and support legs. Cameras are mounted to the vehicle and configured to monitor the area surrounding the vehicle. Images taken by the cameras are transformed into a bird view image and this bird view image is shown on a display in the driver's cabin of the vehicle. Markings illustrating the position of the support legs in different operating positions are superposed on the bird view. Hereby, it will be possible for the driver, when parking the vehicle, to check that there are no obstacles in the surroundings which will interfere with the support legs.

GB-2425520 relates to a vehicle positioning apparatus for positioning a container carrying vehicle relative to an overhead craned that is used for the loading and unloading of containers.

And finally, EP-2543622 discloses a monitoring system for an extensible boom of a mobile crane, wherein a camera is mounted near the outer end of the extensible boom in order to monitor a load suspended by the boom. The image taken by the camera is shown on a display. An image illustrating the extensible boom may be superposed on the image shown on the display. A limit performance line illustrating an area of maximum operation radius in which the extensible boom can move is superposed on the image shown on the display.

Thus, it is previously known to show, on a display in the driver's cabin of a vehicle, a bird view image of the vehicle and the area surrounding the vehicle, and that markings illustrating the position of support legs in different operating positions are superposed on the bird view.

One typical situation for a utility vehicle is when a garbage truck is collecting waste from bins.

When emptying waste from bins the position of the bin in relation to the vehicle is important in order for the distal part of a crane to automatically and rapidly pick up the bin and empty it in the container of the vehicle. It requires high skill of the driver to position the vehicle correctly in relation to the bin for the procedure to run fast and smoothly.

The object of the present invention is to achieve an improved vehicle and an improved method used in such a vehicle that provides supporting guidance for the operator of the vehicle to accurately and easily position the vehicle in relation to an object (e.g. a bin).

### Summary

The above-mentioned object is achieved by the present invention according to the independent claims.

Preferred embodiments are set forth in the dependent claims.

According to a first aspect the invention relates to a vehicle for loading objects, comprising at least one sensing device mounted on the vehicle and being configured to capture measurement data to monitor the entire area, or a part of the area surrounding the vehicle. The at least one sensing device is configured to generate at least one measurement data signal including the captured measurement data, and a processing unit configured to receive the measurement data signal and to determine a real time overview image, e.g. a bird-view image, of the area surrounding the vehicle based upon the measurement data, and further to generate a real time image signal to be applied to a display unit configured to show the real time overview image. The processor unit is further configured to generate a target image, comprising a target marker, to be shown on the display unit superimposed on a shown real time overview image of the area surrounding the vehicle. The target image is superimposed such that the vehicle is in an optimal position in relation to a predetermined object when the target marker overlays a real time image of the predetermined object.

According to a second aspect the invention comprises a method to be applied in a vehicle for loading objects. The method comprises:
- capturing measurement data by at least one sensing device mounted on the vehicle to monitor the entire area, or a part of the area surrounding the vehicle,
- generating at least one measurement data signal including the captured measurement data,
- receiving, in a processing unit, the measurement data signal,
- determining a real time overview image, e.g. a bird-view image, of the area surrounding the vehicle based upon said measurement data,
- generating a real time image signal and applying it to a display unit,
- showing said real time overview image in the display unit. The method further comprises:
   - generating, by the processor unit, a target image comprising a target marker,
   - showing the target image on said display unit superimposed on a shown real time overview image of the area surrounding the vehicle, wherein said target image is superimposed such that the vehicle is in an optimal position in relation to a predetermined object when the target marker overlays a real time image of the predetermined object.

According to one embodiment, the processing unit, when the vehicle is in the optimal position, is configured to generate a control signal to a loading arrangement to initiate a loading procedure comprising moving said object to said vehicle. The control signal may be manually or automatically generated. This is advantageous in order to reduce the time of moving the object to the vehicle.

According to another embodiment the optimal position is determined in dependence of one or many of the following parameters: the type of vehicle, the type of object, the weight of object, type of loading arrangement, e.g. type of crane. Furthermore, the target image may be one in a set of target images, and that each target image illustrates a predefined optimal position. Thereby it is possible to have a plurality of different target images each tailored for a particular situation.

According to still another embodiment the target marker has a shape of a box, or a circle, or of another shape that easily may be identified by the operator.

By implementing the present invention an optimal position of a vehicle in relation to on object is identified, and the operator of the vehicle is guided in order to reach the optimal position in a fast and efficient way. Optimal placement of the vehicle in relation to the object (load) increases the efficiency and reduces the time for the load cycle. A further advantage is that it may be easier to implement an autonomous loading cycle, as the operator is guided to reach an optimal position for the vehicle in order for a semi- or fully automated loading procedure to be applied including identifying and attaching a distal part of the loading arrangement to the object.

### Brief description of the drawings

Figure 1 is a block diagram schematically illustrating a vehicle according to the present invention.
Figures 2 and 3 are schematic illustration of a screen of a display unit according to the present invention.
Figure 4 shows a simplified illustration of a vehicle moving on a road in an environment close to an object.
Figures 5-7 show three different images presented on the device unit when the vehicle is in the three positions indicated in figure 4.
Figures 8 and 9 show target images that comprise schematic illustrations of vehicle and object.
Figure 10 is a flow diagram illustrating the method according to the present invention.

### Detailed description

The vehicle and the method will now be described in detail with references to the appended figures. Throughout the figures the same, or similar, items have the same reference signs. Moreover, the items and the figures are not necessarily to scale, emphasis instead being placed upon illustrating the principles of the invention.

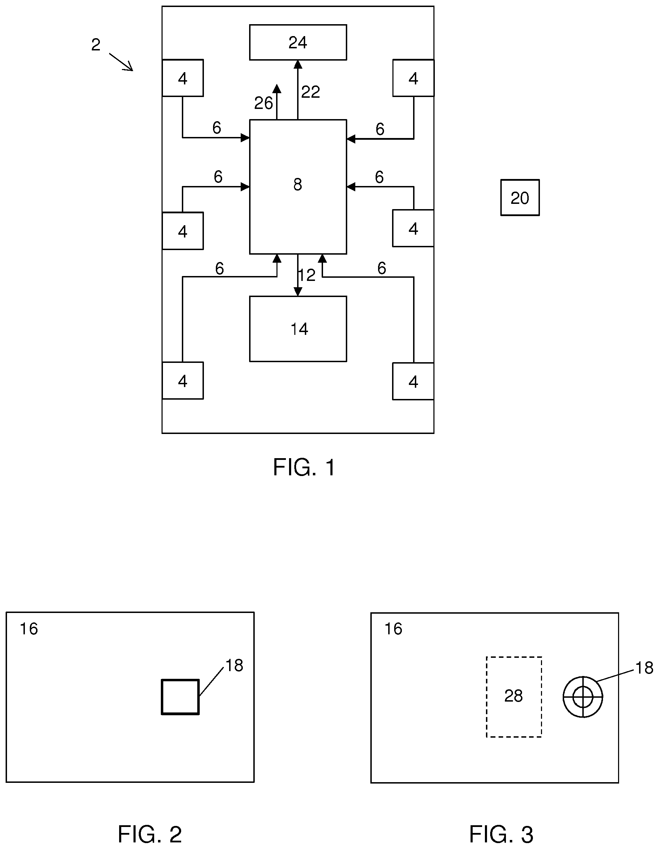

First with references to the schematic illustration in figure 1 the present invention relates to a vehicle for loading objects 18, e.g. emptying a waste bin, loading a pile of forestry. The vehicle is provided with a load arrangement 24, e.g. a roof mounted crane (RMC), or a general articulated crane, capable of lifting loads from the ground to the load carrying part of the vehicle, and also for lifting loads from the vehicle to the ground.

Often the vehicle is provided with supporting legs, e.g. four supporting legs, which is structured to be extended a pre-set distance often in a lateral and perpendicular direction in relation to the longitudinal axis of the vehicle. By applying the supporting legs a stable support for the vehicle is achieved during a load lifting procedure. The distances that the support legs extend depend upon e.g. the weight of the load, and also of the position of the load in relation to the vehicle. The object to be handled is not a part of the vehicle 2 and not physically connected to the vehicle but instead positioned outside the vehicle in an environment being accessible by the vehicle.

The vehicle comprises at least one sensing device 4 mounted on the vehicle 2 and being configured to capture measurement data to monitor the entire area, substantially the entire area, or a part of the area surrounding the vehicle. The part may be half of the area surrounding the vehicle, e.g. an area to the right of the vehicle. The sensing device may be one or many of a camera, a radar, an infra-red sensor, a laser-scanner, or any other type of sensing device. Various combinations of different types of sensing devices may be applied, e.g. one or many cameras and one or many laser-scanners.

The at least one sensing device 4 is configured to generate at least one measurement data signal 6 including the captured measurement data.

The vehicle further comprises a processing unit 8 configured to receive the measurement data signal 6 and to determine a real time overview image 10 of the entire area surrounding the vehicle 2 based upon the measurement data.

The processing unit 8 is further configured to generate a real time image signal 12 to be applied to a display unit 14 configured to show the real time overview image 10. The processor unit is provided with a necessary processing capability, and also computer memories, and is e.g. realized by a general computer unit normally available in the vehicle.

The number of sensing devices, e.g. cameras, is naturally related to the visual fields of the cameras that should be overlapping to cover the entire surroundings around the vehicle. In the figure six cameras are illustrated preferably arranged at elevated positions on the vehicle, but of course fewer or more sensing devices could be applied. The measurement data, e.g. the images, received from the sensing devices (the cameras) are then combined to a single overview image. In one embodiment the vehicle itself may be represented as central rectangular marking in the centre of the image - see figure 3.

The measurement data received by the processing unit from the sensing devices represent the surroundings obtained at an angle that may range from 0 to 180 degrees in relation to the level of the ground. These images obtained by the sensing devices should then be transferred to an overview image, e.g. an image from above, i.e. a so-called bird-view image.

For many applications an image from above is most useful. However, also views from other directions may be applicable to provide an overview of a load to be collected. These other directions range from essentially parallel to the ground to perpendicular to the ground. Below is a bird-view transformation technique described which also is generally applicable.

Generally, a bird-eye view transformation technique is applied to generate a top view perspective of an image obtained by the sensing devices. One applied technique can be classified under digital image processing as a geometrical image modification. Basically the bird's eye view transform can be divided into three steps. First the image has to be represented in a shifted coordinate system, in a next step a rotation of the image is performed, and then the image is projected on a two dimensional plane.

The display unit is advantageously mounted in the cabin of the vehicle 2 such that images shown on the display are easily visible for the operator, e.g. the driver. Thus, the display is configured to show an overview illustration, e.g. a view from above, of the area, or a part of the area surrounding the vehicle, and an object, if visible, to be picked up. The feature display should be interpreted broadly and should e.g. also comprise projected images, e.g. images projected at the windscreen, i.e. so-called heads-up system.

In order to guide the operator to an optimal position for the vehicle in relation to an object, e.g. for loading the object to the vehicle, the processor unit 8 is further configured to generate a target image 16, comprising a target marker 18, to be shown on the display unit 14 superimposed on a shown real time overview image 10 of the area surrounding the vehicle. The target image 16 is superimposed such that the vehicle 2 is in an optimal position in relation to the predetermined object 20 when the target marker 18 overlays a real time image of the predetermined object 20. Thus, the target marker is a graphical representation of the optimal position of a load to be picked up in relation to the vehicle.

When the vehicle is in the optimal position the processing unit 8 is configured to generate a control signal 22 to a loading arrangement 24 to initiate a loading procedure comprising moving the object 20 to the vehicle 2.

In one embodiment the control signal 22 is generated in response of a manual activation by an operator. The manual activation may be pressing a button or entering a command via a graphical user interface.

In another embodiment the control signal 22 instead is automatically generated. More in detail this is achieved by applying an identification procedure where the object is identified by the processing unit, and the position of the object in the overview image is compared to the position of the target marker. When those positions correspond, or essentially correspond, the control signal will be generated. The vehicle may also be a totally automated vehicle, e.g. self-driving and/or driver-less vehicles.

In still another embodiment the processing unit 8 is configured to generate an indication signal 26 when the optimal position is obtained. This signal may be a visual indication, e.g. the target marker may be highlighted or turn e.g. green. In addition, or solely, an audible signal may be generated.

The loading arrangement 24 is provided with at least one sensing device 4, e.g. a camera, capable of capturing measurement data to be applied by the processing unit 8 to assist the operator during the loading procedure. More particularly, the initial positioning of the loading arrangement, e.g. to roughly position the crane close to the object, is first performed. Then, by using the information obtained by the sensing device at the loading arrangement a more accurate positioning is performed, that may include connecting pick-up members of the loading arrangement to a bin for lifting it up and emptying it.

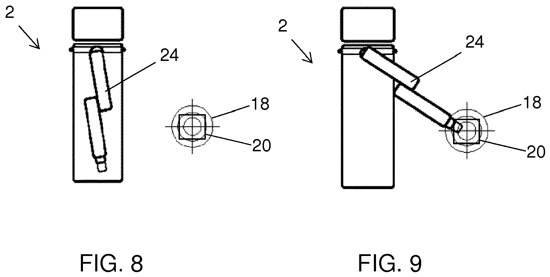

The optimal position of the vehicle in relation to the object is determined in dependence of one or many of the following parameters: the type of vehicle, the type of object, the weight of the object, the type of loading arrangement, e.g. type of crane, and the type of, and the extensions of, used supporting legs of the vehicle. In the illustrated example the optimal position is essentially a predetermined distance in a perpendicular direction from a mid-point of the vehicle. One example of an optimal position is also illustrated in figure 9 where a loading arrangement, e.g. a crane, is in particular angle in relation to the vehicle.

In one embodiment the target image 16 comprises a static, schematic overview illustration of a vehicle and a target marker.

Preferably, the target image 16 is one of a set of target images, and that each target image illustrates a predefined optimal position. This is advantageous as the vehicle may be applied for a variety of different loading situations, where each loading situation has a dedicated optimal position. Different loading situations may include that the each loading situation has its determined optimal position for a particular object weight, and that different optimal positions are determined for different weights where other parameters (extension of supporting legs, etc.) are the same. The operator may choose a target image by entering the choice to the processing unit.

The target marker 18 has a shape that easily may be identified by the operator. The shape may be of a box (see figure 2), a circle (see figure 3), or any other geometrical illustration or any other image.

In one embodiment target image 16 comprises a schematic illustration of a loading arrangement 24 of the vehicle. This is illustrated in figures 8 and 9, showing the loading arrangement 24 in a passive state, and in an active state, respectively.

In a further variation of the vehicle disclosed herein the processing unit is configured to generate a support image to be overlaid the shown overview image and target image to support the user. The support image may comprise a schematic illustration of any applied supporting legs and the extension of these legs, and/or a schematic illustration of a load envelope for a loading arrangement, e.g. a forestry crane, showing the possible maximal reach for the loading arrangement.

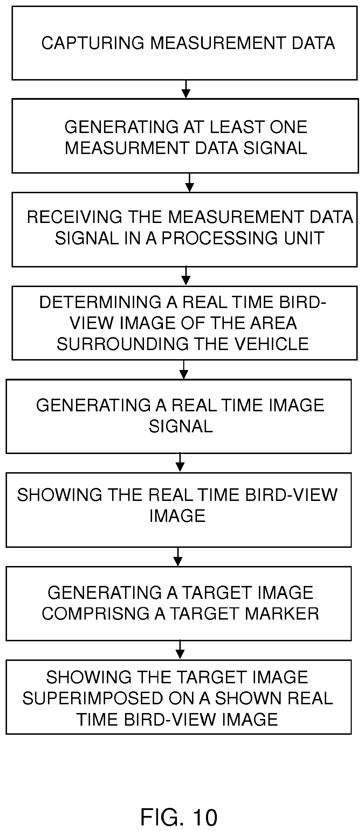

The present invention also relates to a method to be applied in a vehicle (2) for loading objects. The method will now be discussed in detail with references to the flow diagram shown in figure 10.

The method comprises capturing measurement data by at least one sensing device 4 mounted on the vehicle 2 to monitor the entire area, or a part of the area surrounding the vehicle, and generating at least one measurement data signal 6 including said captured measurement data. The method further comprises receiving, in a processing unit 8, the measurement data signal 6, determining a real time overview image 10 of the area surrounding the vehicle 2 based upon the measurement data, generating a real time image signal 12 and applying it to a display unit 14 where the real time overview image 10 is shown.

Furthermore, the method comprises generating, by the processor unit 8, a target image 16 comprising a target marker 18, and showing the target image 16 on said display unit 14 superimposed on a shown real time overview image 10 of the area surrounding the vehicle. Particularly, the target image 16 is superimposed such that the vehicle 2 is in an optimal position in relation to a predetermined object 20 when the target marker 18 overlays a real time image of the predetermined object 20. The object 20 is not a part of the vehicle 2, but instead e.g. a waste bin or a pile of forestry, or any other object to be picked-up or handled by a loading arrangement of the vehicle.

In one embodiment, when the vehicle is in the optimal position, the method comprises generating, by the processing unit, a control signal 22 to a loading arrangement 24 to initiate a loading procedure comprising moving the object 18 to the vehicle 2. The control signal may be automatically or manually generated which has been further discussed above.

In one further embodiment the target image 16 comprises a static, schematic overview illustration of a vehicle and a target marker 18. This is illustrated in figure 3 where the vehicle is illustrated by a dashed-lined rectangle 28.

The optimal position is determined in dependence of one or many of the following parameters: the type of vehicle, the type of object, the weight of the object, the type loading arrangement, e.g. crane.

In order to handle various situations, the target image 16 is one in a set of target images, and that each target image illustrates a predefined optimal position. The operator may choose a particular target image in dependence of the type of object to be pick-up.

In a further embodiment the target marker 18 has a shape of a box, or a circle, or of another shape that easily may be identified by the operator.

Advantageously, the method further comprises generating, by the processor unit, an indication signal 26 when the optimal position is obtained. This indication signal may be a visual or an audible signal.

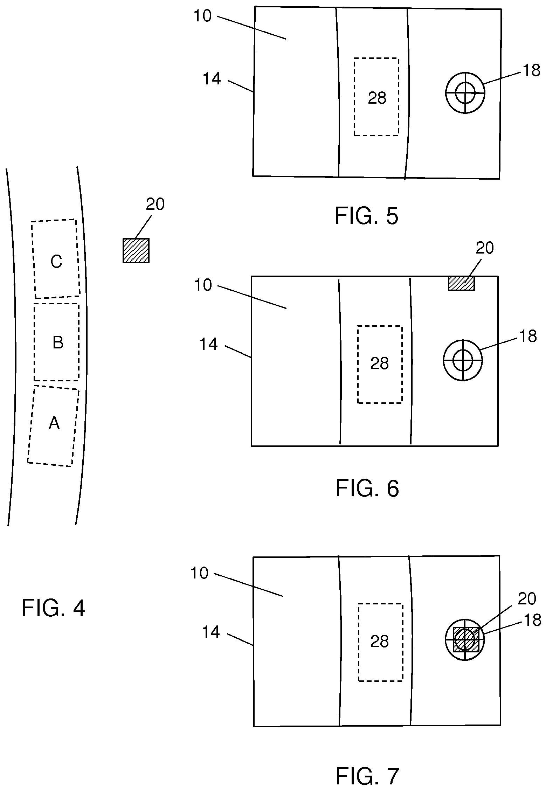

With references to figures 4-7 one typical situation for a vehicle applying the present invention will be described. Figure 4 shows a simplified illustration of a vehicle moving on a road in an environment close to an object, and figures 5-7 show three different images presented on the display unit 14 when the vehicle is in the three positions A, B and C indicated in figure 4. In the illustrated example also the vehicle 28 is shown.

When the vehicle is in position A that display unit 14 will show the image of figure 5, i.e. a real time overview image 10 having the target marker 18 superimposed. Only the road and the vehicle are shown.

As the vehicle approaches the object 20, the vehicle is in position B, and the image of the object will emerge on the display unit 14. This is shown in figure 6. The operator (the driver) may now move the vehicle to an optimal position by looking at the display unit and try to position the vehicle such that the target marker 18 overlays the image of the object 20. The vehicle is then in position C, and the display unit shows the screen image as illustrated in figure 7.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A vehicle (2) for loading objects, comprising:
- at least one sensing device (4) mounted on the vehicle (2) and being configured to capture measurement data to monitor the entire area, or a part of the area surrounding the vehicle, the at least one sensing device (4) is configured to generate at least one measurement data signal (6) including said captured measurement data,
- a processing unit (8) configured to receive said measurement data signal (6) and to determine a real time overview image (10), i.e. an image from above, of the area surrounding the vehicle (2) based upon said measurement data, and further to generate a real time image signal (12) to be applied to a display unit (14) configured to show said real time overview image (10),
**characterized in that** the processor unit (8) is further configured to generate a target image (16), comprising a target marker (18), to be shown on said display unit (14) superimposed on a shown real time overview image (10) of the area surrounding the vehicle to guide the operator to an optimal position for the vehicle in relation to an object, wherein said target image (16) is superimposed such that the vehicle (2) is in an optimal position for loading objects in relation to a predetermined object (20) when the target marker (18) overlays a real time image of the predetermined object (20).

2. The vehicle (2) according to claim 1, wherein when the vehicle is in said optimal position the processing unit (8) is configured to generate a control signal (22) to a loading arrangement (24) to initiate a loading procedure comprising moving said object (20) to said vehicle (2).

3. The vehicle (2) according to claim 2, wherein said control signal (22) is automatically generated.

4. The vehicle (2) according to claim 2, wherein said control signal (22) is generated in response of a manual activation by an operator.

5. The vehicle (2) according to any of claims 2-4, wherein said loading arrangement (24) is provided with at least one sensing device (4) capable of capturing measurement data to be applied by said processing unit (8) to assist the operator during the loading procedure.

6. The vehicle (2) according to any of claims 1-5, wherein said target image (16) comprises a static, schematic overview illustration of a vehicle (28) and a target marker (18).

7. The vehicle (2) according to any of claims 1-6, wherein said optimal position is determined in dependence of one or many of the following parameters: the type of vehicle, type of object, weight of object, type of loading arrangement, e.g. type of crane.

8. The vehicle (2) according to any of claims 1-7, wherein said target image (16) comprises a schematic illustration of a loading arrangement (24) of the vehicle.

9. The vehicle according to any of claims 1-8, wherein the processing unit (8) is configured to generate an indication signal (26) when said optimal position is obtained.

10. The vehicle (2) according to any of claims 1-9, wherein said predetermined object (20) is not a part of the vehicle (2).

11. A method to be applied in a vehicle (2) for loading objects, the method comprises:
- capturing measurement data by at least one sensing device (4) mounted on the vehicle (2) to monitor the entire area, or a part of the area surrounding the vehicle,
- generating at least one measurement data signal (6) including said captured measurement data,
- receiving, in a processing unit (8), said measurement data signal (6),
- determining a real time overview image (10), i.e. an image from above, of the area surrounding the vehicle (2) based upon said measurement data,
- generating a real time image signal (12) and applying it to a display unit (14),
- showing said real time overview image (10) in the display unit (14),
**characterized in that** the method further comprises:
- generating, by the processor unit (8), a target image (16) comprising a target marker (18),
- showing the target image (16) on said display unit (14) superimposed on a shown real time overview image (10) of the area surrounding the vehicle to guide the operator to an optimal position for the vehicle in relation to an object, wherein said target image (16) is superimposed such that the vehicle (2) is in an optimal position for loading objects in relation to a predetermined object (20) when the target marker (18) overlays a real time image of the predetermined object (20).

12. The method according to claim 11, wherein when the vehicle is in said optimal position the method comprises:
- generating, by the processing unit, a control signal (22) to a loading arrangement (24) to initiate a loading procedure comprising moving said object (18) to said vehicle (2).

13. The method according to any of claims 11 and 12, wherein said optimal position is determined in dependence of one or many of the following parameters: the type of vehicle, type of object, weight of object, type loading arrangement, e.g. crane.

14. The method according to any of claims 11-13, comprising generating, by the processor unit, an indication signal (26) when said optimal position is obtained.

15. The method according to any of claims 11-14, wherein said predetermined object (20) is not a part of the vehicle (2).

## Patentansprüche

1. Fahrzeug (2) zum Laden von Objekten, umfassend:
- mindestens eine Sensorvorrichtung (4), die an dem Fahrzeug (2) angebracht und so konfiguriert ist, dass sie Messdaten erfasst, um den gesamten das Fahrzeug umgebenden Bereich oder einen Teil des das Fahrzeug umgebenden Bereichs zu überwachen, wobei die mindestens eine Sensorvorrichtung (4) so konfiguriert ist, dass sie mindestens ein Messdatensignal (6) erzeugt, das die erfassten Messdaten enthält,
- eine Verarbeitungseinheit (8), die so konfiguriert ist, dass sie das Messdatensignal (6) empfängt und ein Echtzeit-Übersichtsbild (10), d.h. ein Bild von oben, des das Fahrzeug (2) umgebenden Bereichs auf der Grundlage der Messdaten bestimmt, und ferner ein Echtzeit-Bildsignal (12) erzeugt, das an eine Anzeigeeinheit (14) angelegt wird, die so konfiguriert ist, dass sie das Echtzeit-Übersichtsbild (10) zeigt,
**dadurch gekennzeichnet, dass** die Prozessoreinheit (8) ferner so konfiguriert ist, dass sie ein Zielbild (16) erzeugt, das eine Zielmarkierung (18) umfasst, die auf der Anzeigeeinheit (14) angezeigt wird, die einem angezeigten Echtzeit-Übersichtsbild (10) des das Fahrzeug umgebenden Bereichs überlagert ist, um den Bediener zu einer optimalen Position für das Fahrzeug in Bezug auf ein Objekt zu führen, wobei das Zielbild (16) so überlagert ist, dass sich das Fahrzeug (2) in einer optimalen Position zum Laden von Objekten in Bezug auf ein vorbestimmtes Objekt (20) befindet, wenn die Zielmarkierung (18) ein Echtzeit-Bild des vorbestimmten Objekts (20) überlagert.

2. Fahrzeug (2) nach Anspruch 1, wobei die Verarbeitungseinheit (8) so konfiguriert ist, dass sie, wenn sich das Fahrzeug in der optimalen Position befindet, ein Steuersignal (22) für eine Ladeanordnung (24) erzeugt, um einen Ladevorgang einzuleiten, der ein Bewegen des Objekts (20) zu dem Fahrzeug (2) umfasst.

3. Fahrzeug (2) nach Anspruch 2, wobei das Steuersignal (22) automatisch erzeugt wird.

4. Fahrzeug (2) nach Anspruch 2, wobei das Steuersignal (22) als Reaktion auf eine manuelle Aktivierung durch eine Bedienungsperson erzeugt wird.

5. Fahrzeug (2) nach einem der Ansprüche 2 bis 4, wobei die Ladeanordnung (24) mit mindestens einer Sensorvorrichtung (4) versehen ist, die Messdaten erfassen kann, die von der Verarbeitungseinheit (8) zur Unterstützung des Bedieners während des Ladevorgangs angewendet werden.

6. Fahrzeug (2) nach einem der Ansprüche 1 bis 5, wobei das Zielbild (16) eine statische, schematische Übersichtsdarstellung eines Fahrzeugs (28) und einer Zielmarkierung (18) umfasst.

7. Fahrzeug (2) nach einem der Ansprüche 1 bis 6, wobei die optimale Position in Abhängigkeit von einem oder mehreren der folgenden Parameter bestimmt wird: Typ des Fahrzeugs, Typ des Objekts, Gewicht des Objekts, Typ der Ladeanordnung, z. B. Typ des Krans.

8. Fahrzeug (2) nach einem der Ansprüche 1 bis7, wobei das Zielbild (16) eine schematische Darstellung einer Ladeanordnung (24) des Fahrzeugs umfasst.

9. Fahrzeug nach einem der Ansprüche 1 bis 8, wobei die Verarbeitungseinheit (8) so konfiguriert ist, dass sie ein Anzeigesignal (26) erzeugt, wenn die optimale Position erreicht ist.

10. Fahrzeug (2) nach einem der Ansprüche 1 bis 9, wobei das vorbestimmte Objekt (20) kein Teil des Fahrzeugs (2) ist.

11. Verfahren zur Anwendung in einem Fahrzeug (2) zum Laden von Objekten, wobei das Verfahren umfasst:
- Erfassen von Messdaten durch mindestens eine am Fahrzeug (2) angebrachte Sensorvorrichtung (4), um den gesamten das Fahrzeug umgebenden Bereich oder einen Teil des das Fahrzeug umgebenden Bereichs zu überwachen,
- Erzeugen mindestens eines Messdatensignals (6), das die erfassten Messdaten enthält,
- Empfangen des Messdatensignals (6) in einer Verarbeitungseinheit (8),
- Bestimmen eines Echtzeit-Übersichtsbildes (10), d.h. eines Bildes von oben, des das Fahrzeug (2) umgebenden Bereichs auf der Grundlage der Messdaten,
- Erzeugen eines Echtzeit-Bildsignals (12) und Anlegen desselben an eine Anzeigeeinheit (14),
- Anzeigen des Echtzeit-Übersichtsbildes (10) in der Anzeigeeinheit (14), **dadurch gekennzeichnet, dass** das Verfahren weiterhin umfasst:
- Erzeugen eines Zielbildes (16), das eine Zielmarkierung (18) enthält, durch die Prozessoreinheit (8),
- Anzeigen des Zielbildes (16) auf der Anzeigeeinheit (14), das einem angezeigten Echtzeit-Übersichtsbild (10) des das Fahrzeug umgebenden Bereichs überlagert ist, um den Bediener zu einer optimalen Position für das Fahrzeug in Bezug auf ein Objekt zu führen, wobei das Zielbild (16) so überlagert ist, dass sich das Fahrzeug (2) in einer optimalen Position zum Laden von Objekten in Bezug auf ein vorbestimmtes Objekt (20) befindet, wenn die Zielmarkierung (18) ein Echtzeitbild des vorbestimmten Objekts (20) überlagert.

12. Verfahren nach Anspruch 11, wobei das Verfahren, wenn sich das Fahrzeug in der optimalen Position befindet, umfasst:
- Erzeugen eines Steuersignals (22) durch die Verarbeitungseinheit an eine Ladeanordnung (24), um einen Ladevorgang einzuleiten, der ein Bewegen des Objekts (18) zu dem Fahrzeug (2) umfasst.

13. Verfahren nach einem der Ansprüche 11 oder 12, wobei die optimale Position in Abhängigkeit von einem oder mehreren der folgenden Parameter bestimmt wird: Typ des Fahrzeugs, Typ des Objekts, Gewicht des Objekts, Typ der Ladeanordnung, z. B. Kran.

14. Verfahren nach einem der Ansprüche 11 bis 13, das die Erzeugung eines Anzeigesignals (26) durch die Prozessoreinheit umfasst, wenn die optimale Position erreicht ist.

15. Verfahren (11) nach einem der Ansprüche 11 bis 14, wobei das vorbestimmte Objekt (20) kein Teil des Fahrzeugs (2) ist.

## Revendications

1. Véhicule (2) destiné à charger des objets, comprenant :
- au moins un dispositif de détection (4) monté sur le véhicule (2) et étant configuré de manière à capturer des données de mesure pour surveiller la totalité de la zone, ou une partie de la zone entourant le véhicule, ledit au moins un dispositif de détection (4) étant configuré de manière à générer au moins un signal de données de mesure (6) incluant lesdites données de mesure capturées ;
- une unité de traitement (8) configurée de manière à recevoir ledit signal de données de mesure (6) et à déterminer une image d'ensemble en temps réel (10), c'est-à-dire une image vue du dessus, de la zone entourant le véhicule (2), sur la base desdites données de mesure, et en outre à générer un signal d'image en temps réel (12) à appliquer à une unité d'affichage (14) configurée de manière à montrer ladite image d'ensemble en temps réel (10) ;
**caractérisé en ce que** l'unité de traitement (8) est en outre configurée de manière à générer une image de cible (16), comprenant un marqueur de cible (18), à montrer sur ladite unité d'affichage (14), superposée sur une image d'ensemble en temps réel montrée (10) de la zone entourant le véhicule, en vue de guider l'opérateur vers une position optimale du véhicule par rapport à un objet, dans laquelle ladite image de cible (16) est superposée, de sorte que le véhicule (2) est dans une position optimale pour charger des objets par rapport à un objet prédéterminé (20), lorsque le marqueur de cible (18) recouvre une image en temps réel de l'objet prédéterminé (20).

2. Véhicule (2) selon la revendication 1, dans lequel, lorsque le véhicule est dans ladite position optimale, l'unité de traitement (8) est configurée de manière à générer un signal de commande (22) vers un agencement de chargement (24) en vue d'initier une procédure de chargement comprenant le déplacement dudit objet (20) vers ledit véhicule (2).

3. Véhicule (2) selon la revendication 2, dans lequel ledit signal de commande (22) est généré automatiquement.

4. Véhicule (2) selon la revendication 2, dans lequel ledit signal de commande (22) est généré en réponse à une activation manuelle par un opérateur.

5. Véhicule (2) selon l'une quelconque des revendications 2 à 4, dans lequel ledit agencement de chargement (24) est doté d'au moins un dispositif de détection (4) en mesure de capturer des données de mesure devant être appliquées par ladite unité de traitement (8) pour aider l'opérateur pendant la procédure de chargement.

6. Véhicule (2) selon l'une quelconque des revendications 1 à 5, dans laquelle ladite image de cible (16) comprend une illustration d'ensemble statique et schématique d'un véhicule (28) et d'un marqueur de cible (18).

7. Véhicule (2) selon l'une quelconque des revendications 1 à 6, dans laquelle ladite position optimale est déterminée en fonction d'un ou plusieurs des paramètres suivants : un type de véhicule, un type d'objet, un poids d'objet, un type d'agencement de chargement, par exemple un type de grue.

8. Véhicule (2) selon l'une quelconque des revendications 1 à 7, dans laquelle ladite image de cible (16) comprend une illustration schématique d'un agencement de chargement (24) du véhicule.

9. Véhicule selon l'une quelconque des revendications 1 à 8, dans laquelle l'unité de traitement (8) est configurée de manière à générer un signal d'indication (26) lorsque ladite position optimale est obtenue.

10. Véhicule (2) selon l'une quelconque des revendications 1 à 9, dans lequel ledit objet prédéterminé (20) ne fait pas partie du véhicule (2).

11. Procédé destiné à être appliqué dans un véhicule (2) pour charger des objets, dans lequel le procédé comprend les étapes ci-dessous consistant à :
- capturer des données de mesure, par le biais d'au moins un dispositif de détection (4) monté sur le véhicule (2), en vue de surveiller la totalité de la zone, ou une partie de la zone entourant le véhicule ;
- générer au moins un signal de données de mesure (6) incluant lesdites données de mesure capturées ;
- recevoir, dans une unité de traitement (8), ledit signal de données de mesure (6) ;
- déterminer une image d'ensemble en temps réel (10), c'est-à-dire une image vue du dessus, de la zone entourant le véhicule (2), sur la base desdites données de mesure ;
- générer un signal d'image en temps réel (12) et appliquer ledit signal à une unité d'affichage (14) ;
- montrer ladite image d'ensemble en temps réel (10) dans l'unité d'affichage (14) ;
**caractérisé en ce que** le procédé comprend en outre les étapes ci-dessous consistant à :
- générer, par le biais de l'unité de traitement (8), une image de cible (16) comprenant un marqueur de cible (18) ;
- montrer l'image de cible (16) sur ladite unité d'affichage (14), superposée à une image d'ensemble en temps réel montrée (10) de la zone entourant le véhicule, en vue de guider l'opérateur vers une position optimale du véhicule par rapport à un objet, dans laquelle ladite image de cible (16) est superposée de sorte que le véhicule (2) est dans une position optimale pour charger des objets par rapport à un objet prédéterminé (20) lorsque le marqueur de cible (18) recouvre une image en temps réel de l'objet prédéterminé (20) .

12. Procédé selon la revendication 11, dans lequel, lorsque le véhicule est dans ladite position optimale, le procédé comprend l'étape ci-dessous consistant à :
- générer, par le biais de l'unité de traitement, un signal de commande (22) vers un agencement de chargement (24), en vue d'initier une procédure de chargement comprenant le déplacement dudit objet (18) vers ledit véhicule (2).

13. Procédé selon l'une quelconque des revendications 11 et 12, dans laquelle ladite position optimale est déterminée en fonction d'un ou plusieurs des paramètres suivants : un type de véhicule, un type d'objet, un poids d'objet, un type d'agencement de chargement, par exemple un type de grue.

14. Procédé selon l'une quelconque des revendications 11 à 13, comprenant l'étape consistant à générer, par le biais de l'unité de traitement, un signal d'indication (26), lorsque ladite position optimale est obtenue.

15. Procédé selon l'une quelconque des revendications 11 à 14, dans lequel ledit objet prédéterminé (20) ne fait pas partie du véhicule (2).
